# EUROPEAN PATENT APPLICATION

(11) **EP 4 517 383 A1**
(43) Date of publication of application: **05.03.2025**
(21) Application number: 23194591.6
(22) Date of filing: 31.08.2023
(51) Int. Cl.: G01S 13/931, G01S 7/41, G01S 13/58

(54) **METHOD FOR DETERMINING ELEVATED TRAINS, RELATED DRIVING SYSTEM AND VEHICLE**

(71) Applicant: Continental Autonomous Mobility Germany GmbH, 85057 Ingolstadt (DE); Honda Motor Co. Ltd., Tokyo 107-8556 (JP)
(72) Inventor: Anguraj, Arulganesh, Singapore 339780 (SG); Kanthi, Sheetal, Singapore 339780 (SG); Kobayashi, Fumiya, Tokyo 107-8556 (JP)
(74) Representative: Maiwald GmbH

(57) **Abstract**

The invention relates to method (8) for determining elevated trains (6.3) for a driving system (2). According to the method (8), sensor data is received from sensors (3; 4), wherein the sensors (3; 4) comprise at least one radar detector (4). Then, objects (6) are detected based on the received sensor data and classified. It is determined whether a candidate object (6) is classified as an elevated train compatible object and whether the candidate object (6) has been detected based on radar data only. If both conditions are true, the candidate object (6) is labeled as elevated train possible. It is then determined whether at least another one out of the candidate objects (6) is labeled as elevated train possible. If yes, it is determined whether the candidate object (6) and the other one out of the candidate objects (6) have features compatible with an elevated train (6.3). If yes, the candidate object (6) is classified as elevated train probable and information on elevated train probable objects (6) is provided to a function of the driving system (2).

## Description

### TECHNICAL FIELD

The invention relates to object detection for driver assistance systems and/or for autonomous driving, in particular to a method for determining elevated trains for a driving system, more particularly for an advanced driver assistance system and/or an autonomous driving system, to a driving system that is adapted to determine elevated trains and to a vehicle with said driving system.

### BACKGROUND

Object detection is a crucial element of driver assistance systems and/or autonomous driving systems and many functions of said driver assistance systems and/or autonomous driving systems depend on the results of the object detection.

One particular problem with object detection arises when elevated trains are present in a scene and the detection of said objects is performed with radar detectors: since the height of an object over ground cannot be accurately determined with the radar detectors, elevated trains - which do not affect a vehicle on the road since they are on a different elevation level - may be misinterpreted as objects on the road. Such misinterpretation may lead to false actions taken by the driver assistance system and/or autonomous driving system, e.g., to false autonomous emergency braking.

### SUMMARY

It is therefore an object of the present invention to provide an object detection method that overcomes the above-mentioned problems. In particular, it is an object of the present invention to provide a method for determining elevated trains, a related driving system and a vehicle comprising such a driving system.

The object of the present invention is solved by the subject matter of the independent claims, wherein further embodiments are incorporated in the dependent claims.

According to an aspect of the invention, a method for determining elevated trains for a driving system is provided.

The method may be a computer-implemented method. In particular, the method may be performed by a computing unit, in particular the computing unit of the driving system. The computing unit may comprise one or more processors, and the method may be performed by several processors by way of parallel computing and/or distributed computing.

Elevated trains are trains that are elevated compared to a ground level, wherein the ground level is an elevation level on which an ego vehicle travels. That is, the elevated trains are at a greater height than the ego vehicle. More particularly, the elevated trains are located so high that the vehicle can pass underneath them without a collision.

The driving system may be a driver assistance system, in particular an advanced driver assistance system, and/or an autonomous driving system.

According to the method, sensor data is received from sensors of a driving system of a vehicle. In the context of this application, the vehicle may be a road vehicle, in particular a car, a bus, a truck or a motorbike. The sensors comprise at least one radar detector and may further comprise a plurality of other sensors, such as cameras, including RGB cameras, black and white cameras and infrared cameras, or a lidar detector. Said sensors may acquire data, e.g., radar data and/or images, and may provide said data to the computing unit of the driving system. According to the method, the sensor data comprises radar data.

Based on the received sensor data, objects are detected. Using image data, said object detection may be performed, e.g., by way of edge detection with a subsequent shape analysis, or with an artificial intelligence, e.g., a deep neural network. Using radar data, object detection may be performed, e.g., using shape recognition techniques, or with an artificial intelligence. When sensor data of several sensors is available, said sensor data may be combined in order to achieve results that are more accurate. When several sets of sensor data, taken at different times, are analyzed, it may be further checked whether the detected object remains over a predetermined time length; if it does not remain over said predetermined time length, it may be considered a false detection. Using a radar detector, a distance to the object, a location of the object and a size of the object may be determined.

The detected objects are then classified. Said classification may be performed, e.g., on the size and/or the shape of the object and may be performed for each of the detected objects. Classes may include, e.g., pedestrians, bicycles, motorbikes, cars, trucks, or unclassified objects.

For each candidate object out of the detected objects, the following steps are performed. In this context, the term "candidate object" refers to any one of the detected objects, and is chosen to identify the object for which the steps are performed.

It is determined whether the candidate object is classified as an elevated train compatible object, i.e., whether the candidate object could be a part of an elevated train. Given the examples of classes presented above, objects that are classified as pedestrians, bicycles, motorbikes or cars would be too small to be a part of an elevated train. Hence, only trucks or unclassified objects are elevated train compatible objects.

Further, it is determined whether the candidate object has been detected based on radar data only. That is, it is checked which sensor data has been used for detecting the candidate object and more particularly, whether only radar data has been used or also sensor data other than radar data.

If it is determined that the candidate object is classified as elevated train compatible object and that the candidate object has been detected based on radar data only, the following steps are performed. If, on the other hand, the candidate object has not been classified as elevated train compatible object, or the candidate object has been detected based also on sensor data other than radar data, the following steps for determining whether the candidate object could be a part of an elevated train do not have to be performed: if the candidate object is classified as not being elevated train compatible, the candidate object cannot be an elevated train. If, on the other hand, also other sensor data than radar data, in particular camera data, is used, the height of the object above the ground level can be determined, which already implies whether the candidate object is a part of an elevated train or not.

The candidate object is then labeled as elevated train possible. As an example, a respective flag may be set for the candidate object.

Further, it is determined whether at least another one out of the candidate objects is labeled as elevated train possible. This is preferably done after the above described steps have been performed for all of the candidate objects, such that it is clear which ones of the detected objects are elevated train possible.

If at least one other candidate object is elevated train possible, it is determined whether the candidate object and the other one out of the candidate objects have features compatible with an elevated train. This determination may be repeated for every one out of the other candidate objects that are elevated train possible. If the candidate object and at least one other one out of the candidate objects have features compatible with an elevated train, the candidate object is classified as elevated train probable, i.e., it is determined that it is probable that the candidate object is an elevated train. In this context, features compatible with an elevated train means that the candidate object and the at least one other candidate object have features such that they can be considered two cars, in particular two adjacent cars, of an elevated train.

Finally, the information on elevated train probable objects is provided to at least one other function of the driving system. Hence, the other function of the driving system has information on which objects are probably elevated trains and can perform actions according to said information. This improves the performance of the driving system, makes the driving system more reliable and improves the safety of the vehicle.

According to an embodiment, which may be combined with the above-described embodiment or with any below described further embodiment, the elevated train is an elevated monorail or a suspension railway. Both of these elevated trains are often to be found close to roads and/or crossing roads and are at a height where they can be easily detected by radar. Hence, these two kinds of elevated trains are most relevant for the method.

According to an embodiment, which may be combined with any above-described embodiment or with any below described further embodiment, the radar detector is a millimeter wave radar detector. This is a standard detector used in many vehicles, hence the method can also be used to improve the driving system of existing vehicles, e.g., simply by a software upgrade.

According to an embodiment, which may be combined with any above-described embodiment or with any below described further embodiment, the radar detector is a short range radar detector. In this context, a short range radar detector may be a radar detector that has a wide detection range but poor height resolution. Further, the short range radar detector may have a maximum reach of 100 m, more particularly of 50 m, even more particularly of 30 m. If the short range radar detector has poor height resolution, it may not be able to distinguish between an elevated train and a vehicle on the ground level, hence the above-described method is particularly useful for such a radar detector.

According to an embodiment, which may be combined with any above-described embodiment or with any below described further embodiment, the elevated train compatible objects comprise a truck and/or an unclassified object. These are objects that might resemble a car of an elevated train. Other objects, like, e.g., pedestrians, bicycles, motorbikes or cars, however, do not resemble a car of an elevated train. If there are even more classes, the elevated train compatible objects are determined based on a likelihood that a car of an elevated train may be identified as an object of a given class.

According to an embodiment, which may be combined with any above-described embodiment or with any below described further embodiment, the candidate object and the other one out of the candidate objects having features compatible with an elevated train comprises that the size of the candidate object and the size of the other one out of the candidate objects agree within a predetermined size uncertainty. Said size uncertainty may depend on the resolution of the radar detector and may be, e.g., 2 m horizontally. Since individual cars of an elevated train usually have the same size, this is a strong distinguishing feature. Alternatively, or additionally, the candidate object and the other one out of the candidate objects having features compatible with an elevated train comprises that the distance between the candidate object and the other one out of the candidate objects is within a predetermined range. Here, an absolute distance may be chosen, a horizontal distance, or a depth distance, i.e., a difference in the distance from the vehicle. Such a horizontal distance may be, e.g., up to 10 m, and a depth distance may be, e.g., up to 1.5 m. Since individual cars of an elevated train are usually arranged behind one another, this is another strong distinguishing feature. Alternatively, or additionally, the candidate object and the other one out of the candidate objects having features compatible with an elevated train comprises that the velocity of the candidate object and the velocity of the other one out of the candidate objects agree within a predetermined velocity uncertainty. Again, when an elevated train moves, the speed of the individual cars will be the same and their velocity will be very similar, in particular for adjacent cars of the elevated train. Hence, a velocity uncertainty may be, e.g, 1.5 m/s along the travel direction of the objects and 0.5 m/s perpendicular to the travel direction of the objects. The velocity agreement is yet another strong distinguishing feature.

According to an embodiment, which may be combined with any above-described embodiment or with any below described further embodiment, the method further comprises that, after the objects have been detected based on the received sensor data, it is determined whether the detected objects are likely to cross the path of the vehicle and the remaining method steps are performed only for objects that are likely to cross the path of the vehicle. Since the determination whether or not an object is an elevated train is most important for objects that may actually collide with the ego vehicle, computing time and resources can be saved by performing the method only for said objects.

According to an embodiment, which may be combined with any above-described embodiment or with any below described further embodiment, the method further comprises that, before information on elevated train probable objects is provided to the function of the driving system, an elevated train probability is increased for each candidate object that is classified as elevated train probable by a predetermined increment and is decreased for each candidate object that is not classified as elevated train probable by a predetermined decrement. Here, newly detected objects may be initialized with an elevated train probability of zero. The information on elevated train probable objects provided to the function of the driving system then comprises the elevated train probabilities of the objects. Increasing and decreasing the elevated train probability may be limited, e.g., to a predetermined value, for example, 10, and to zero, respectively. As an example, the elevated train probabilities of the object will be continuously increased based on the stability of confirmation until a predefined threshold is reached and the object is confirmed as elevated train probable by setting the respective flag. Similarly, the elevated train probability of the object is continuously decreased if the confirmation is unstable. By taking into account a plurality of pieces of radar data, the determination whether an object is a part of an elevated train is improved.

According to an embodiment, which may be combined with any above-described embodiment or with any below described further embodiment, the function of the driving system is an emergency braking function and, based on determining that an object is an elevated train or a part of an elevated train, the function suppresses autonomous emergency braking for said object. Since the elevated train is above the vehicle, a collision between the elevated train and the vehicle is not possible. By suppressing the autonomous emergency braking for an elevated train, user convenience is improved due to a reduced number of false emergency brakes, and also safety is significantly improved.

According to another aspect of the invention, a driving system is provided. The driving system comprises at least one radar detector and a computing unit and is configured to be operated according to the above description. The advantages and further embodiments correspond to those given in the above description.

According to an embodiment which may be combined with the above-described embodiment, the driving system is a driver assistance system and/or an autonomous driving system. In either case, the operation of the driving system is improved by the determination of objects as elevated trains.

According to yet another aspect of the invention, a vehicle is provided. The vehicle comprises a driving system according to the above description. Hence, the advantages and further embodiments correspond to those given in the above description.

### BRIEF DESCRIPTION OF THE DRAWINGS

These and other aspects of the invention will be apparent from and elucidated further with reference to the embodiments described by way of examples in the following description and with reference to the accompanying drawings, in which
Fig. 1 shows a schematic top view of an embodiment of a vehicle with a driving system;
Fig. 2 shows a schematic example of a traffic scene; and
Fig. 3 shows a flowchart of an embodiment of a method for determining elevated trains for a driving system.

In the figures, elements which correspond to elements already described may have the same reference numerals. Examples, embodiments or optional features, whether indicated as non-limiting or not, are not to be understood as limiting the invention as claimed.

### DESCRIPTION OF EMBODIMENTS

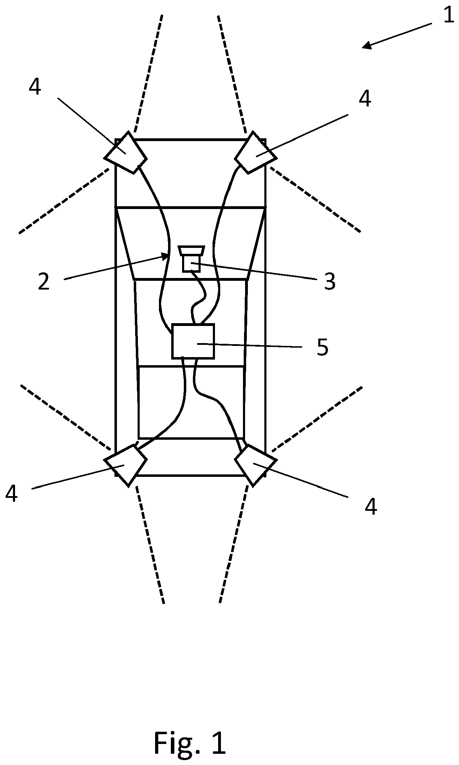

Figure 1 shows a schematic top view of an embodiment of a vehicle 1 with a driving system 2. The driving system 2 comprises a camera 3, four short range radar detectors 4 and a computing unit 5, wherein the camera 3 and the radar detectors 4 are connected to the computing unit 5. In the Figure, said connection is shown as a wired connection, however, a wireless connection is also possible. The coverage angle of the radar detectors 4 is shown with dashed lines. The driving system 2 may further comprise other sensors, such as additional cameras, long range radar detectors, or lidar, which are not shown here for clarity. The driving system 2 may be a driver assistance system, in particular an advanced driver assistance system, and/or an autonomous driving system. The computing unit 5 receives sensor data from the sensors 3, 4 and processes said sensor data. Usually, object detection is performed on the sensor data, the detected objects are tracked and, based on said tracked objects, assistance functions, emergency functions and/or autonomous driving functions are operated.

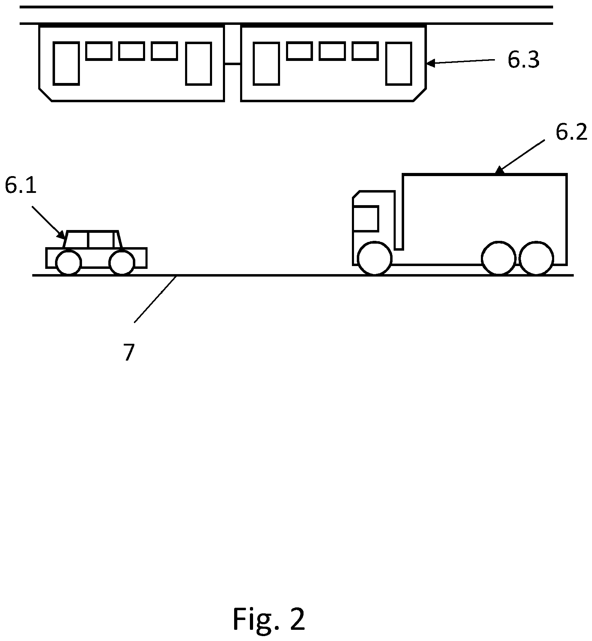

Figure 2 shows a schematic example of a traffic scene with three objects 6: a car 6.1, a truck 6.2 and an elevated train 6.3, here shown as a suspension railway, as observed by an ego vehicle 1. While the car 6.1 and the truck 6.2 drive on a ground level 7 - as does the ego vehicle 1 that observes the traffic scene - the elevated train 6.3 runs at an elevated level, higher than the ground level 7. As can be seen from the Figure, there is no risk of a collision between the elevated train 6.3 and one of the vehicles on the ground level 7. However, since short range radar detectors 4 have a poor vertical resolution, it is not easy to distinguish an elevated train 6.3 from an object 6 on the ground level 7 using short range radar data only.

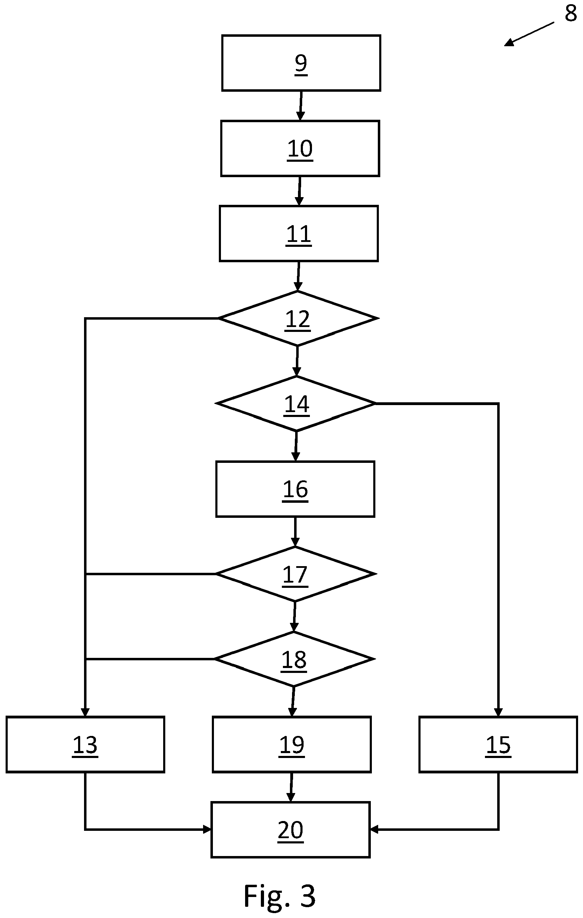

To overcome this problem, a method 8 for determining elevated trains 6.3 for a driving system 2 may be used, as shown in Figure 3.

According to the method 8, sensor data is received 9 from the sensors 3, 4 of the driving system 2. Based on said received 9 sensor data, objects 6 are detected 10. The objects 6 are then classified 11.

It is then determined 12 whether a candidate object 6 is classified as an elevated train compatible object. For example, pedestrians, bicycles, motorbikes and cars 6.1 are too small to be considered cars of an elevated train 6.3, hence a candidate object 6 classified in one of these classes is not elevated train compatible. In that case, it is determined 13 that the object 6 is not an elevated train 6.3.

If it is determined 12 that the candidate object 6 is elevated train compatible, e.g., classified as truck 6.2 or as unclassified object, it is further determined 14 whether the candidate object 6 has been detected based on radar data only. If it has not been detected based on radar data only, i.e., if also other data was used to detect the object 6, it is assumed that height information can be obtained from the other sensor data, and it is determined 15 whether or not the object 6 is a part of an elevated train 6.3 based on the other sensor data.

If the object 6 has been detected based on radar data only, it is labeled 16 as elevated train possible. It is then determined 17 whether at least another one of the candidate objects 6 is labeled as elevated train possible. If none of the other objects 6 is labeled as elevated train possible, it is determined 13 that the object 6 is not an elevated train 6.3.

If it is determined 17 that there is at least another one of the candidate objects 6 labeled as elevated train possible, it is determined 18 whether the candidate object 6 and the other one out of the candidate objects 6 have features compatible with an elevated train 6.3, e.g., having approximately the same size, being located behind one another, and/or having roughly the same velocities. If it is determined 18 that the features of the candidate object 6 and the other one out of the candidate objects 6 are not compatible with an elevated train 6.3, it is determined 13 that the object 6 is not an elevated train 6.3.

If, on the other hand, the candidate object 6 and the other one out of the candidate objects 6 have features compatible with an elevated train 6.3, the candidate object 6 is classified 19 as elevated train probable.

Finally, information on elevated train probable objects 6 is provided 20 to a function of the driving system. Further, information on the objects 6 that have been determined 13 to not be an elevated train 6.3 is provided 20 to the function of the driving system 2, and the results of the determination 15 whether or not the object 6 is a part of an elevated train 6.3 based on the other sensor data are provided 20 to the function of the driving system 2.

Having this information on whether or not an object 6 is a part of an elevated train 6.3, the functions of the driving system 2 may provide better and more reliable results, increasing the driving convenience and the safety.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### List of reference signs

- 1: vehicle
- 2: driving system
- 3: camera
- 4: radar detector
- 5: computing unit
- 6: object
- 6.1: car
- 6.2: truck
- 6.3: elevated train
- 7: ground level
- 8: method
- 9: reception
- 10: detection
- 11: classification
- 12: determination
- 13: determination
- 14: determination
- 15: determination
- 16: labeling
- 17: determination
- 18: determination
- 19: classification
- 20: provision

## Claims

1. Method (8) for determining elevated trains (6.3) for a driving system (2), comprising:
receiving sensor data from sensors (3; 4) of a driving system (2) of a vehicle (1), wherein the sensors (3; 4) comprise at least one radar detector (4) and the sensor data comprises radar data;
detecting objects (6) based on the received sensor data;
classifying the detected objects (6);
for each candidate object (6) out of the detected objects (6):
determining whether the candidate object (6) is classified as an elevated train compatible object;
determining whether the candidate object (6) has been detected based on radar data only;
based on determining that the candidate object (6) is classified as elevated train compatible object and that the candidate object (6) has been detected based on radar data only:
labeling the candidate object (6) as elevated train possible;
determining whether at least another one out of the candidate objects (6) is labeled as elevated train possible;
based on determining that another one out of the candidate objects (6) is labeled as elevated train possible:
determining whether the candidate object (6) and the other one out of the candidate objects (6) have features compatible with an elevated train (6.3); and
based on determining that the candidate object (6) and the other one out of the candidate objects (6) have features compatible with an elevated train (6.3), classifying the candidate object (6) as elevated train probable; and
providing information on elevated train probable objects (6) to a function of the driving system (2).

2. Method (8) according to claim 1, wherein the elevated train (6.3) is an elevated monorail or a suspension railway.

3. Method (8) according to claim 1 or 2, wherein the radar detector (4) is a millimeter wave radar detector.

4. Method (8) according to any one of claims 1 to 3, wherein the radar detector (4) is a short range radar detector.

5. Method (8) according to any one of claims 1 to 4, wherein elevated train compatible objects comprise a truck (6.2) and/or an unclassified object.

6. Method (8) according to any one of claims 1 to 5, wherein the candidate object (6) and the other one out of the candidate objects (6) having features compatible with an elevated train (6.3) comprises:
the size of the candidate object (6) and the size of the other one out of the candidate objects (6) agree within a predetermined size uncertainty;
the distance between the candidate object (6) and the other one out of the candidate objects (6) is within a predetermined range; and/or
the velocity of the candidate object (6) and the velocity of the other one out of the candidate objects (6) agree within a predetermined velocity uncertainty.

7. Method (8) according to any one of claims 1 to 6, further comprising, after the step of detecting objects (6) based on the received sensor data:
determining whether the detected objects (6) are likely to cross the path of the vehicle (1); and
performing the remaining method steps only for objects (6) that are likely to cross the path of the vehicle (1).

8. Method (8) according to any one of claims 1 to 7, further comprising, before the step of providing information on elevated train probable objects (6) to a function of the driving system (2):
increasing an elevated train probability for each candidate object (6) that is classified as elevated train probable by a predetermined increment; and
decreasing an elevated train probability for each candidate object (6) that is not classified as elevated train probable by a predetermined decrement,
wherein the information on elevated train probable objects (6) comprises the elevated train probabilities of the objects (6).

9. Method (8) according to any one of claims 1 to 8, wherein the function of the driving system (2) is an emergency braking function and, based on determining that an object (6) is an elevated train (6.3) or a part of an elevated train (6.3), the function suppresses autonomous emergency braking for said object (6).

10. Driving system (2), comprising at least one radar detector (4) and a computing unit (5), wherein the driving system (2) is adapted to be operated according to the method (8) according to any one of claims 1 to 9.

11. Driving system (2) according to claim 10, wherein the driving system (2) is a driver assistance system and/or an autonomous driving system.

12. Vehicle (1), comprising a driving system (2) according to claim 10 or 11.
